# EUROPÄISCHE PATENTSCHRIFT

(11) **EP 2 077 968 B1**
(45) Veröffentlichungstag und Bekanntmachung des Hinweises auf die Patenterteilung: **27.07.2011**
(21) Anmeldenummer: 07802205.0
(22) Anmeldetag: 07.09.2007
(51) Int. Cl.: B65G 21/20, B65G 47/68

(54) **TRANSPORTSTRECKE**
TRANSPORT PATH
PARCOURS DE TRANSPORT

(30) Priorität: 30.09.2006 DE 102006046556
(43) Veröffentlichungstag der Anmeldung: 15.07.2009
(73) Patentinhaber: KHS GmbH, 44143 Dortmund (DE)
(72) Erfinder: JENDRICHOWSKI, Klaus, 59439 Holzwickede (DE)
(86) Internationale Anmeldenummer: PCT/EP2007/007817
(87) Internationale Veröffentlichungsnummer: WO 2008/037337

(56) Entgegenhaltungen:
- DE-A1- 3 613 724

## Beschreibung

Die Erfindung bezieht sich auf eine Transportstrecke gemäß Oberbegriff Patentanspruch 1.

Transportstrecken zum Transportieren von Flaschen oder dergleichen Behältern sind bekannt, insbesondere auch in einer Ausbildung, bei der die jeweilige Transportstrecke mehrere, jeweils seitlich durch Gassenführungen begrenzte und auch voneinander getrennte Gassen bildet, bei denen die Behälter jeweils als einspuriger Behälterstrom in Transportrichtung bewegt werden. Derartige Transportstrecken bilden beispielsweise den Einlauf von Behälterbehandlungsmaschinen, z. B. Behälterreinigungsmaschinen.

Sollen auf einer derartigen Transportstrecke verschiedene Sorten von Flaschen oder dergleichen Behälter transportiert werden, welche unterschiedliche Durchmesser aufweisen, so ist es erforderlich, die Breite der Gassen an den Durchmesser der Behälter anzupassen, um so den geordneten, einspurigen Behälterstrom in jeder Gasse sicherzustellen und insbesondere auch ein Umfallen der Behälter zu vermeiden.

Die Behälter sind dabei aufrecht stehend auf der beispielsweise von mehreren Transportbändern gebildeten Transportebene oder -fläche der Transportstrecke aufrecht stehend angeordnet.

Aus der DE 36 13 724 A1 ist bekannt, einen Behälterstrom über einen zentralen, verstellbaren Verdränger vorzuformen und dann den drängelnden Behälterstrom in gestaffelte Gassen aufzuteilen. Die Gassenbrelten sind dabei veränderbar, indem die Gassenführungen zueinander im Abstand verändert werden. Ein Teilstrom von Behältern, welcher nicht in die Gassen eingeleitet werden konnte, ist über eine Umlenkung und ein seitlich angeordnetes, rücklaufendes Transportband in den Hauptstrom zurückführbar.

Aufgabe der Erfindung ist es, eine Transportstrecke aufzuzeigen, bei der ohne eine Verstellung der eigentlichen, sich beispielsweise bis in die Behälterbehandlungsmaschine erstreckenden Gassenführungen eine Anpassung der Breite der Gassen an den Behälterdurchmesser möglich ist.

Zur Lösung dieser Aufgabe ist eine Transportstrecke entsprechend dem Patentanspruch 1 ausgebildet.

Weiterbildungen sind Gegenstand der Unteransprüche. Die Erfindung wird im Folgenden anhand der Figuren an einem Ausführungsbeispiel näher erläutert. Es zeigen:
- Fig. 1: in vereinfachter Darstellung und in Draufsicht einen Transporteur zum Transportieren eines mehrspurigen Behälterstroms in Gassen mit einstellbarer Gassenbreite;

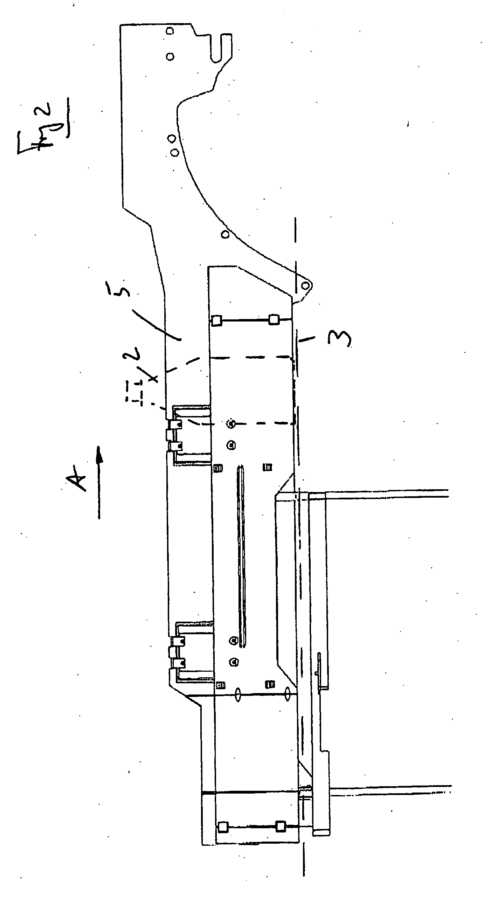

- Fig. 2: in Seitenansicht eine der Gassenführungen des Transporteurs der Figur 1, zusammen mit einem verstellbaren Behälterleit- und Führungselement;

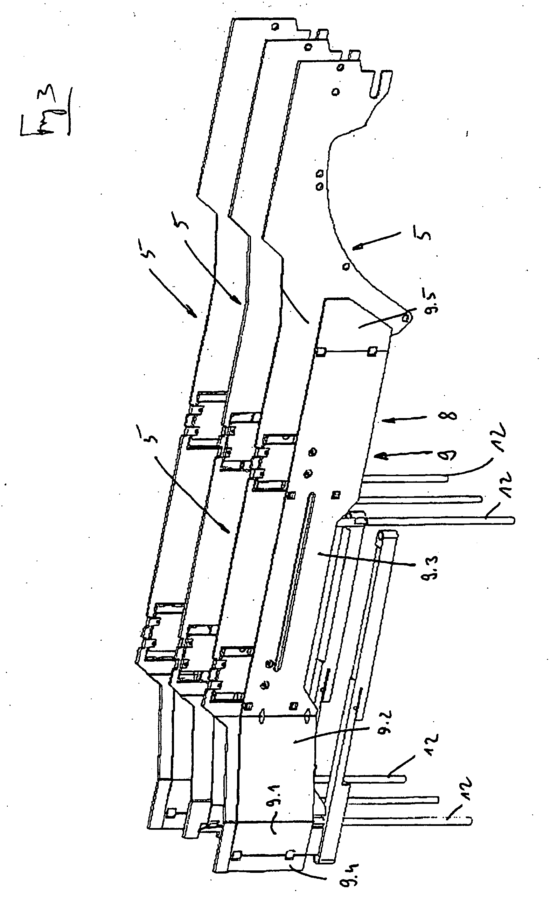

- Fig.3: in einer perspektivischen Darstellung mehrere Gassenführungen der Transportstrecke der Figur 1;
- Fig.4: in schematischer Darstellung ein Ende eines Behälterleit- und Führungselementes;
- Fig. 5: in Einzeldarstellung und in Seitenansicht ein Verstellelement zum gleich- zeitigen Verstellen zweier Behälterleit- und Führungselemente;
- Fig. 6: in Positionen a) - c) in sehr vereinfachter Darstellung und im Schnitt eine mehrere Gassen bildende mehrspurige Transportstrecke zum Transportieren von Behältern, zusammen mit reiterartig auf die Gassenführungen aufsetz- bare Führungselemente zur Änderung der Gassenbreite.

In den Figuren ist 1 eine Transportstrecke für Flaschen oder dergleichen Behälter 2, die auf einer von mehreren Transportbändern gebildeten horizontalen oder im Wesentlichen horizontalen Transportebene oder -fläche 3 aufrecht stehend, d.h. mit ihrer Flaschen- oder Behälterachse in vertikaler Richtung orientiert in einer Transportrichtung A bewegt werden.

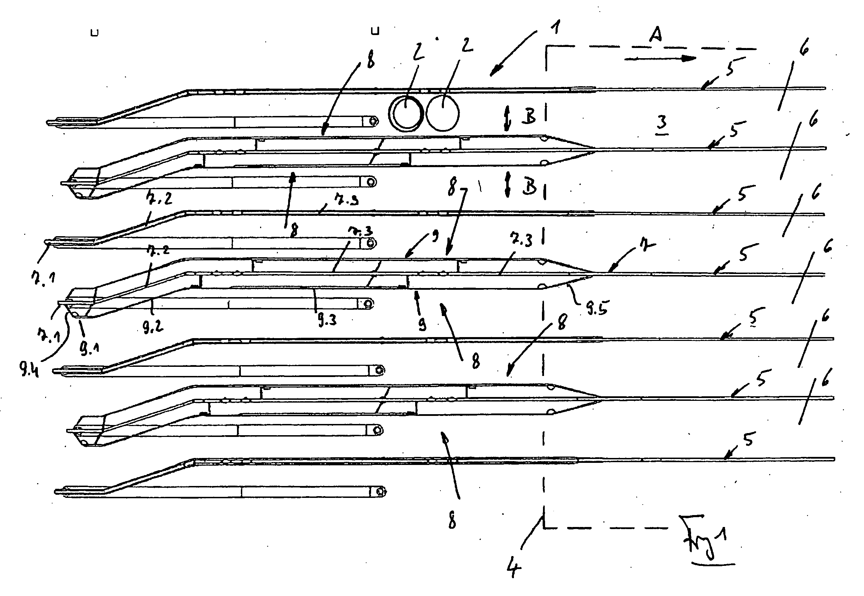

Die Transportstrecke 1 bildet beispielsweise den Einlauf einer in der Figur 1 nur sehr schematisch mit 4 angedeuteten Behälterbehandlungsmaschine, z. B. Reinigungsmaschine, der die Behälter 2 in einem mehrspurigen Behälterstrom und in mehreren durch Gassenführungen 5 voneinander getrennten Gassen 6, d. h. bei der Darstellung der Figur 1 in insgesamt sechs Gassen 6 in der Transportrichtung A zugeführt werden.

Die die einzelnen Gassen 6 voneinander trennenden sowie auch die außen liegenden Gassen 6 begrenzenden Gassenführungen 5 sind jeweils von Führungswänden 7 gebildet, die über die Ebene der Transportfläche 3 nach oben vorstehend seitliche Führungsflächen für die Behälter 2 bilden. Dem generellen Verlauf der Gassen 6 entsprechend setzen sich die Führungswände 7 jeweils aus einem in Transportrichtung A orientierten Wandabschnitt 7.1, aus einem schräg zur Transportrichtung A verlaufenden Wandabschnitt 7.2 und einem wieder in Transportrichtung A verlaufenden Wandabschnitt 7.3 zusammensetzen, wobei diese Wandabschnitte in Transportrichtung A in der vorstehend angegebenen Reihenfolge aufeinander folgen und mit ihren Ebenen jeweils senkrecht oder im Wesentlichen senkrecht zur Ebene der Transportfläche 3 orientiert sind.

Sollen mit der Transportstrecke 1 Flaschen oder Behälter 2 mit unterschiedlichem Durchmesser behandelt werden, so ist es notwendig, die Breite der Gassen 6 zumindest am Einlauf der Behandlungsmaschine 4 an den Durchmesser der Behälter 2 so anzupassen, dass die effektive Gassenbreite gleich oder nur geringfügig größer als der Behälterdurchmesser ist, um so u.a. ein Umfallen der Behälter 2 während des Transportes zu vermeiden. Diese Gassenbreitenanpassung erfolgt durch Reduzierung der maximalen Gassenbreite, die durch den Abstand benachbarter Gassenführungen 5 bestimmt ist. Für die Gassenbreitenanpassung sind die Gassenführungen 5 teilweise mit Behälterleit- und Führungselementen 8 versehen, die in den Gassen 6 seitliche Leit- und Führungsflächen für die Behälter 2 bilden und die senkrecht zur Transportrichtung A verstellbar sind.

Bei der in der Figur 1 dargestellten Ausführungsform sind derartige Behälterleit- und Führungselemente 8 jeweils nur an solchen Gassenführungen 5 vorgesehen, die zwei benachbarte Gassen 6 voneinander trennen, und zwar in einer Betrachtungsrichtung senkrecht zur Transportrichtung A auch nur jeweils an jeder zweiten, zwei Gassen 6 voneinander trennenden Gassenführung 5. Die Behälterleit- und Führungselemente 8 sind weiterhin jeweils paarweise an der betreffenden Gassenführung 5 vorgesehen, d.h. ein Behälterleit- und Führungselement 8 eines solchen Paares befindet sich an jeder Seite der betreffenden Gassenführung 5 senkrecht zur Transportrichtung A einander gegenüber liegend.

Für eine weitere, überaus vorteilhafte aber nicht dargestellt Ausführungsform der vorliegenden Erfindung ist vorgesehen, die Behälterleit- und Führungselemente 8 in solcher Ausführung und Menge anzuordnen, dass diese an beiden Führungswänden 7 einer jeden Gasse 6 angeordnet sind. Durch diese Vorgehensweise wird es ermöglicht, dass auch Behälter 2 mit kleinen Durchmessern mittig in der Gasse 6 geführt werden, wodurch beispielsweise das Überleiten dieser Behälter 2 an die dem Fachmann bekannten Übernahmefinder einer als Behälterreinigungsmaschine ausgebildeten Behälterbehandlungsmaschine 4 vereinfacht wird.

Die Behälterleit- und Führungselemente 8 sind ebenso wie die Gassenführungen 5 von Führungswänden 9 gebildet, die über die Ebene der Transportfläche 3 nach oben vorstehen und sich aus mehreren Wandabschnitten zusammensetzen, und zwar aus einem in Transportrichtung A verlaufenden Wandabschnitt 9.1, aus einem schräg zur Transportrichtung A verlaufenden Wandabschnitt 9.2 und aus einem in Transportrichtung A verlaufenden Wandabschnitt 9.3, wobei die Wandabschnitte wieder in der vorstehend angegebenen Reihenfolge in Transportrichtung A aufeinander folgen. Weiterhin sind die Wandabschnitte 9.1 parallel oder im Wesentlichen parallel zu dem zugehörigen Wandabschnitt 7.1, die Wandabschnitte 9.2 parallel oder im Wesentlichen parallel zu dem zugehörigen Wandabschnitt 7.2 und die Wandabschnitte 9.3 parallel oder im Wesentlichen parallel zu dem zugehörigen Wandabschnitt 7.3 angeordnet.

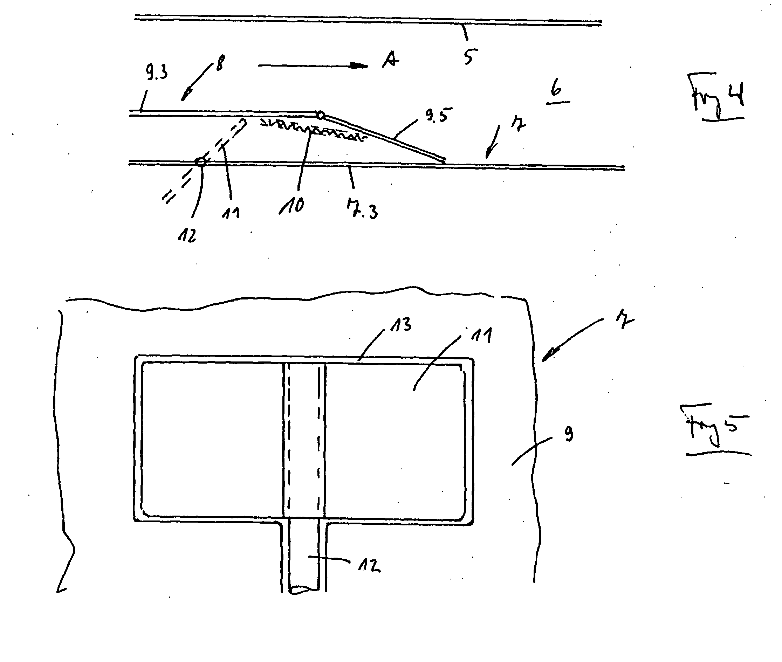

An dem bezogen auf die Transportrichtung A vorderen und hinteren Ende weist jedes Behälterleit- und Führungselement 8 einen zusätzlichen Wandabschnitt 9.4 bzw. 9.5 auf, der um eine Achse senkrecht zur Ebene der Transportfläche 3 an dem Wandabschnitt 9.1 bzw. 9.3 angelenkt und beispielsweise durch Federmittel 10 derart vorgespannt ist, dass der betreffende Wandabschnitt 9.4 bzw. 9.5 mit seinem dem Wandabschnitt 9.1 bzw. 9.3 entfernt liegenden Rand federnd gegen die zugehörigen Gassenführung 5 bzw. gegen den Wandabschnitt 7.1 bzw. 7.3 außerhalb des jeweiligen Behälterleit- und Führungselementes 8 anliegt, wie dies auch in der Figur 4 dargestellt ist. Die Wandabschnitte 9.4 und 9.5 stellen hierdurch einen von der Gassenbreitenanpassung unabhängigen stufenlosen Übergang zwischen den Führungswänden 7 bzw. 9 sicher.

Die Führungswände 9 der Behälterleit- und Führungselemente 8 sind so an einem nicht dargestellten Maschinengestell der Transportstrecke 1 vorgesehen, dass sie durch Verstellelemente 11 zur Gassenbreitenanpassung senkrecht zur Transportrichtung A verstellbar sind, und zwar zwischen einer Position, in der die Führungswände 9 dicht gegen die Führungswand 7 der zugehörigen Gassenführung 5 anliegen, und einer Position, in der die Führungswände 9 der Behälterleit- und Führungselemente 8 von der Führungswand 7 der zugehörigen Gassenführung 5 beabstandet sind, wie dies in der Figur 1 mit den Doppelpfeilen B angedeutet ist. Da sowohl die Gassenführungen 5, als auch die Behälterleit- und Führungselemente 8 jeweils von Führungswänden 7 bzw. 9 gebildet sind, und sich außerdem insbesondere auch die nicht dargestellten Mittel, die das seitliche Verstellen der Behälterleit- und Führungselemente 8 ermöglichen, unterhalb der Ebene der Transportfläche 3 befinden, liegen die Führungswände 9 bei der größten eingestellten Gassenbreite möglichtst dicht gegen die Führungswand 7 der zugehörigen Gassenführung 5 an. Trotz der Gassenbreitenanpassung sind insbesondere bei der größten Gassenbreite Todräume zwischen den einzelnen Gassen 6 vermieden, was ein dichtes Aneinander-Anschließen der Gassen 6 und somit einen geringen Abstand der Gassen 6 zueinander ermöglicht. Wie insbesondere auch die Figur 4 zeigt, besitzen die Führungswände 9 eine Höhe, die etwas kleiner ist als die Höhe der Führungswände 7, allerdings sind die Führungswände 9 ausreichend hoch, um eine zuverlässige Führung der Behälter 2 zu gewährleisten.

Die Führungswände der Behälterleit- und Führungselemente 8 sind beispielsweise durch Federmittel in ihre gegen die zugehörige Führungswand 7 anliegende oder dieser unmittelbar benachbarte Ausgangsstellung vorgespannt und zur Einstellung der Gassenbreite bzw. Gassenbreitenanpassung gegen diese Federmittel durch die Verstellelemente 11 verstellbar. Die Verstellelemente 11 sind hierbei z. B. flügelartig ausgebildet und jeweils an einer Welle 12 vorgesehen, die mit ihrer Achse senkrecht zur Ebene der Transportfläche 3 orientiert ist und in der Mittelebene der betreffenden Führungswand 7 liegt. Jedes oberhalb der Ebene der Transportfläche 3 angeordnete flügelartige Verstellelement 11 bildet mit seinen der Welle 12 entfernt liegenden und von dieser radial wegstehenden Enden Anlageflächen, mit der das Verstellelement 10 gegen die der betreffenden Gasse 6 abgewandte Innenfläche jeweils einer Führungswand 9 anliegt, und zwar derart , dass beim Drehen der Welle 12 über das Verstellelement 11 die beiden Führungswände 9 der beidseitig von der betreffenden Gassenführung 5 vorgesehenen Behälterleit- und Führungselemente 8 zur Reduzierung der Gassenbreite bzw. Gassenbreitenanpassung auseinander bewegt werden. Die Führungsmittel für die Führungswände 9 sind dabei so ausgebildet, dass sich die beidseitig von einer Führungswand 7 vorgesehenen Führungswände 9 jeweils gleichsinnig von dieser Führungswand 7 wegbewegen. Weiterhin sind für die jeweils paarweise angeordneten Behälterleit- und Führungselemente 8 mehrere Verstellelemente 11 vorgesehen und sämtliche Verstellelemente 11 der Transportstrecke 1 bzw. deren Wellen 12 sind antriebsmäßig miteinander verbunden, sodass über einen gemeinsamen Antrieb manuell oder motorisch eine bzw. Gassenbreitenanpassung sämtlicher Gassen 6 gemeinsam durchgeführt werden kann.

Wie die Figur 5 zeigt, ist in der Führungswand 7 für das jeweilige Verstellelement 11 eine Öffnung 13 vorgesehen, sodass jedes Verstellelement 11 in seiner Ausgangsstellung nicht über die Ebene der Außenfläche der Führungswand 7 vorsteht, was ebenfalls dazu beiträgt, dass in der Ausgangsstellung die Führungswände 9 dicht gegen die Führungswand 7 anliegen können.

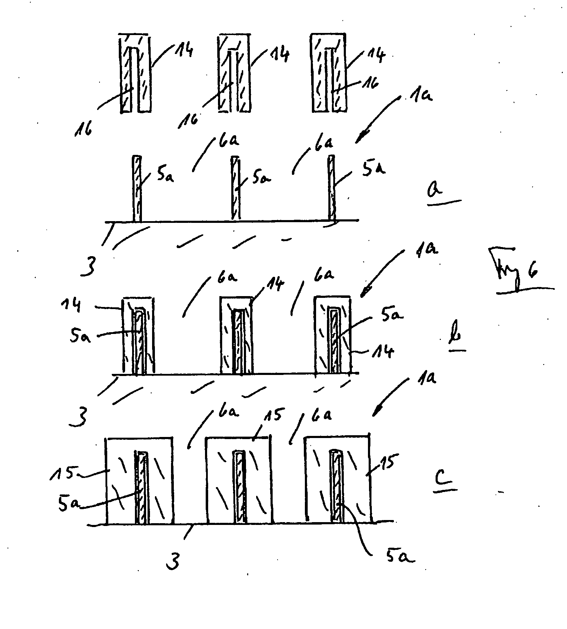

Die Figur 6 zeigt in sehr schematischer Darstellung als weitere Ausführungsform eine Transportstrecke 1 a, die wiederum durch mehrere von Führungswänden gebildete Gassenführungen 5a in mehrere Gassen 6a unterteilt ist. Um die Breite der Gassen 6a an Behälter 2 mit unterschiedlichem Durchmesser anpassten zu können, sind bei dieser Ausführungsform reiterartig auf die Gassenführungen 5a aufsetzbare Behälterleit- und Führungselemente 14 bzw. 15 vorgesehen, die beispielsweise aus Formteile aus Kunststoff hergestellt sind und sich zumindest über eine Teillänge der Transportstrecke 1a erstrecken, auf der (Teillänge) eine Gassenbreitenanpassung an den Durchmesser der Behälter 2 erforderlich ist, beispielsweise im Bereich des Einlaufs oder des Auslaufs einer Behälterbehandlungsmaschine, z. B. einer Reinigungsmaschine.

Die Behälterleit- und Führungselemente 14 besitzen dabei eine geringere Breite als die Behälterleit- und Führungselemente 15. Durch die Verwendung derartiger Behälterleit- und Führungselemente unterschiedlicher Breite, die z. B. als Set bereitgestellt werden, ist dann eine Gassenbreitenanpassung an den Durchmesser der jeweils zu verarbeitenden Behälter 2 möglich.

Sind die Gassenführungen 5a wiederum ähnlich den Gassenführungen 5 bzw. den Führungswänden 7 mehrfach abgewinkelt, so weisen auch die Behälterleit- und Führungselemente 14 bzw. 15 diese Formgebung bzw. diesen Verlauf auf, sodass sie jeweils reiterartig mit ihrer zur Unterseite hin offenen schlitzförmigen Öffnung 16 auf die Gassenführungen 5a aufgesetzt werden können.

Es versteht sich von selbst, dass die als Aufsatzelemente ausgebildeten Behälterleit- und Führungselemente 14, 15, an ihrem, in Transportrichtung gesehen, vorderen Ende eine spitzenförmige Gestalt haben, um die auf sie zulaufenden Behälter sicher in die Gassen 6 leiten zu können.

Die Erfindung wurde an Ausführungsbeispielen beschrieben. Es versteht sich, dass Änderungen sowie Abwandlungen möglich sind, ohne dass dadurch der der Erfindung zugrunde liegende Erfindungsgedanke verlassen wird.

## Patentansprüche

1. Transportstrecke zum Transportieren von Flaschen oder dergleichen Behältern (2) in einer Transportrichtung (A), wobei die Transportstrecke (1, 1a) für die Behälter (2) zumindest auf einer sich in Transportrichtung (A) erstreckenden Teillänge wenigstens zwei Gassen (6, 6a) bildet, die durch senkrecht zur Transportrichtung (A) voneinander beabstandete Gassenführungen (5, 5a) seitlich begrenzt und voneinander getrennt sind, **dadurch gekennzeichnet, dass** zusätzlich zu den Gassenführungen (5) mit Ihrer Längserstreckung in Transportrichtung (A) orientierte, In der Breite variable Behälterleit- und Führungselemente (8, 14, 15) vorgesehen sind, die seitliche Leit- oder Führungsflächen für die Behälter (2) in der jeweiligen Gasse (5, 5a) bilden und die zumindest auf einer Teillänge der Gassen (6, 6a) durch Reduzierung einer durch den Abstand der Gassenführungen (5, 5a) definierten maximalen Gassenbreite eine Gassenbreitenanpassung an den Durchmesser der jeweils zu verarbeitenden Behälter (2) ermöglichen, wobei die Behälterleit- und Führungselemente (8) an ihrem bezogen auf die Transportrichtung (A) vorderen und/oder rückwärtigen Ende einen Leit- oder Führungsabschnitt (9.4, 9.5) aufweisen, der einen Übergang zwischen der Gassenführung (5) und dem Behälterleit- und Führungselement (8) bildet.

2. Transportstrecke nach Anspruch 1, **dadurch gekennzeichnet, dass** der Leit- oder Führungsabschnitt (9.4, 9.5) gelenkig am Behälterleit- und Führungselement (8) und/oder an der zugehörigen der Gassenführung (5) vorgesehen ist.

3. Transportstrecke nach Anspruch 1 oder 2, **dadurch gekennzeichnet, dass** der Leit- oder Führungsabschnitt (9.4, 9.5) zur federnden Anlage gegen das Behälterlelt- und Führungselement (8) und/oder gegen die Gassenführung (5) vorgespannt ist.

4. Transportstrecke nach einem der Ansprüche 1 bis 3, **dadurch gekennzeichnet, dass** die Übergänge zwischen dem jeweiligen Behälterleit- und Führungselement (8) und der benachbarten Gassenführung (5) Wandabschnitte (9.4, 9.5) sind.

5. Transportstrecke nach einem der vorgenannten Ansprüche, **dadurch gekennzeichnet, dass** die Behälterleit- und Führungselemente (8 14, 15) jeweils an einer Gassenführung (5, 5a) vorgesehen sind.

6. Transport nach einem der vorgenannten Ansprüche, **dadurch gekennzeichnet, dass** an wenigstens einer, zwei Gassen (6, 6a) trennenden Gassenführung (5, 5a) zur Gassenbreitenanpassung jeweils wenigstens ein Behälterleit- und Führungselement (8, 14, 15) vorgesehen ist.

7. Transportstrecke nach einem der vorgenannten Ansprüche, **dadurch gekennzeichnet, dass** die Behälterleit- und Führungselemente (14, 15) zumindest teilweise von Formteilen gebildet sind, die zur Reduzierung der Gassenbreite an jeweils einer Gassenführung (5a) befestigbar, vorzugsweise auf jeweils eine Gassenführung (5a) aufsetzbar sind.

8. Transport nach einem der vorgenannten Ansprüche, **dadurch gekennzeichnet, dass** die Behälterleit- und Führungselemente (8 14, 15) senkrecht zur Transportrichtung (A) verstellbar sind.

9. Transportstrecke nach einem der vorhergehenden Ansprüche, **dadurch gekennzeichnet, dass** die Behälterleit- und Führungselemente (8) bzw. deren Leit- oder Führungsflächen von wenigstens einer Leit- oder Führungswand (9) gebildet sind.

10. Transportstrecke nach einem der vorgenannten Ansprüche, **dadurch gekennzeichnet, dass** die wenigstens zwei beidseitig einer gemeinsamen Gassenführung (5) vorgesehenen Behälterleit- und Führungselement (8) symmetrisch zur Gassenführung (5) verstellbar sind.

11. Transportstrecke nach einem der vorhergehenden Ansprüche, **dadurch gekennzeichnet, dass** an wenigstens einer Gasse (6) dem an einer der Gassenführungen (5) vorgesehenen Behälterleit- und Führungselement (8) eine Gassenführung (5) ohne ein solches Behelterleit- und Führungselement (8) gegenüberliegt.

12. Transportstrecke nach einem der vorhergehenden Ansprüche, **dadurch gekennzeichnet, dass** an wenigstens einer Gasse (6a) dem an einer der Gassenführungen (5a) vorgesehenen Behalterleit- und Führungselement (14, 15) ein weiteres Behälterleit- und Führungselement (14, 15) an einer anderen Gassenführungen (5a) gegenüberliegt.

13. Transportstrecke nach einem der vorhergehenden Ansprüche, **dadurch gekennzeichnet, dass** Behälterleit- und Führungselemente (8) ausschließlich an solchen Gassenführungen (5) vorgesehen sind, die jeweils zwei einander benachbarte Gassen (6) voneinander trennen.

14. Transportstrecke nach einem der vorhergehenden Ansprüche, **gekennzeichnet durch** wenigstens ein Verstellelement (11, 12) zum Verstellen jedes Behälterleit- und Führungselementes (8) quer zur Transportrichtung (A).

15. Transportstrecke nach Anspruch 15, **dadurch gekennzeichnet, dass** bei zwei beidseitig von einer Gassenführung (5) vorgesehenen Behälterleit- und Führungselementen (8) wenigstens ein für beide Behälterlelt- und Führungselemente gemeinsames Verstellelement (11, 12) vorgesehen ist.

16. Transportstrecke nach einem der vorhergehenden Ansprüche, **dadurch gekennzeichnet, dass** bei mehreren Behälterlelt- und Führungselementen (8) und/oder bei mehreren Verstellelementen (11, 12) für solche Behälterleit- und Führungselemente (8) ein gemeinsamer Antrieb für sämtliche Verstellelemente (11, 12) vorgesehen ist.

## Claims

1. Transport path for transporting bottles or similar containers (2) in a transport direction (A), wherein the transport path (1, 1 a) for the containers (2) forms, at least over a sub-length extending in the transport direction (A), at least two channels (6, 6a) which are delimited laterally and are separated from one another by channel guides (5, 5a) which are spaced apart from one another perpendicular to the transport direction (A), **characterised in that**, in addition to the channel guides (5), container directing or guide elements (8, 14, 15) are provided which are variable in width and are oriented with their longitudinal dimension in the transport direction (A), which container directing or guide elements form lateral directing or guide surfaces for the containers (2) in the respective channel (5, 5a) and, at least over a sub-length of the channels (6, 6a), make it possible to adapt the channel width to the diameter of the respective containers (2) to be processed by reducing a maximum channel width defined by the spacing of the channel guides (5, 5a), wherein the container directing and guide elements (8) have, at their front and/or rear end in relation to the transport direction (A), a directing or guide section (9.4, 9.5) which forms a transition between the channel guide (5) and the container directing and guide element (8).

2. Transport path according to claim 1, **characterised in that** the directing or guide section (9.4, 9.5) is provided in an articulated manner on the container directing and guide element (8) and/or on the associated channel guide (5).

3. Transport path according to claim 1 or 2, **characterised in that** the directing or guide section (9.4, 9.5) is pretensioned for resilient bearing against the container directing and guide element (8) and/or against the channel guide (5).

4. Transport path according to one of claims 1 to 3, **characterised in that** the transitions between the respective container directing and guide element (8) and the adjacent channel guide (5) are wall sections (9.4, 9.5).

5. Transport path according to one of the aforementioned claims, **characterised in that** the container directing and guide elements (8, 14, 15) are in each case provided on a channel guide (5, 5a).

6. Transport path according to one of the aforementioned claims, **characterised in that**, on at least one channel guide (5, 5a) separating two channels (6, 6a), in each case at least one container directing and guide element (8, 14, 15) is provided for adapting the channel width.

7. Transport path according to one of the aforementioned claims, **characterised in that** the container directing and guide elements (14, 15) are formed at least partially by moulded parts which can be attached to a respective channel guide (5a), preferably placed on a respective channel guide (5a), in order to reduce the channel width.

8. Transport path according to one of the aforementioned claims, **characterised in that** the container directing and guide elements (8, 14, 15) are adjustable perpendicular to the transport direction (A).

9. Transport path according to one of the preceding claims, **characterised in that** the container directing and guide elements (8) or the directing or guide surfaces thereof are formed by at least one directing or guide wall (9).

10. Transport path according to one of the aforementioned claims, **characterised in that** the at least two container directing and guide elements (8) provided on either side of a common channel guide (5) are adjustable symmetrically in relation to the channel guide (5).

11. Transport path according to one of the preceding claims, **characterised in that**, on at least one channel (6), the container directing and guide element (8) provided on one of the channel guides (5) is located opposite a channel guide (5) without such a container directing and guide element (8).

12. Transport path according to one of the preceding claims, **characterised in that**, on at least one channel (6a), the container directing and guide element (14, 15) provided on one of the channel guides (5a) is located opposite a further container directing and guide element (14, 15) on another channel guide (5a).

13. Transport path according to one of the preceding claims, **characterised in that** container directing and guide elements (8) are provided exclusively on those channel guides (5) which respectively separate two adjacent channels (6) from one another.

14. Transport path according to one of the preceding claims, **characterised by** at least one adjusting element (11, 12) for adjusting each container directing and guide element (8) transversely to the transport direction (A).

15. Transport path according to claim 14, **characterised in that**, in the case of two container directing and guide elements (8) provided on either side of a channel guide (5), at least one common adjusting element (11, 12) is provided for the two container directing and guide elements.

16. Transport path according to one of the preceding claims, **characterised in that**, in the case of a plurality of container directing and guide elements (8) and/or in the case of a plurality of adjusting elements (11, 12) for such container directing and guide elements (8), a common drive is provided for all the adjusting elements (11, 12).

## Revendications

1. Voie de transport pour le transport de bouteilles ou récipients (2) similaires dans un sens de transport (A), la voie de transport (1, 1a) pour les récipients (2) formant au moins sur une longueur partielle, qui s'étend dans le sens de transport (A), au moins deux couloirs (6, 6a) qui sont délimités latéralement et séparés l'un de l'autre par des joues (5, 5a) écartées l'une de l'autre perpendiculairement au sens de transport (A), **caractérisée en ce que**, en plus des joues (5), il est prévu des éléments de direction ou guidage des récipients (8, 14, 15) variables en largeur, qui sont orientés avec leur projection longitudinale dans le sens de transport (A), qui forment des surfaces de direction et guidage latérales pour les récipients (2) dans le couloir (5, 5a) respectif et qui, au moins sur une longueur partielle des couloirs (6, 6a), permettent un ajustement de la largeur du couloir au diamètre des récipients (2) à traiter dans chaque cas, moyennant une diminution de la largeur de couloir maximale définie par la distance entres les joues (5, 5a), les éléments de direction ou guidage des récipients (8), au niveau de leurs extrémités avant et/ou arrière par référence au sens de transport (A), comportent un segment de direction ou guidage (9.4, 9.5) qui forme une transition entre la joue (5) et l'élément de direction ou guidage des récipients (8).

2. Voie de transport selon la revendication 1, **caractérisée en ce que** le segment de direction ou guidage (9.4, 9.5) est prévu de manière articulée sur l'élément de direction ou guidage des récipients (8) et/ou sur la joue (5) associée.

3. Voie de transport selon la revendication 1 ou 2, **caractérisée en ce que** le segment de direction ou guidage (9.4, 9.5) est précontraint pour prendre appui de manière flexible contre l'élément de direction ou guidage des récipients (8) et/ou contre la joue (5).

4. Voie de transport selon l'une quelconque des revendications 1 à 3, **caractérisée en ce que** les transitions entre chaque élément de direction ou guidage des récipients (8) et la joue (5) adjacente sont des parties de paroi (9.4, 9.5).

5. Voie de transport selon l'une quelconque des revendications précédentes, **caractérisée en ce que** les éléments de direction ou guidage des récipients (8, 14, 15) sont prévus respectivement sur une joue (5, 5a).

6. Transport selon l'une quelconque des revendications précédentes, **caractérisé en ce qu'**au niveau d'au moins une joue (5, 5a) séparant deux couloirs (6, 6a) est prévu dans chaque cas au moins un élément de direction ou guidage des récipients (8, 14, 15) en vue de l'ajustement de la largeur des couloirs.

7. Voie de transport selon l'une quelconque des revendications précédentes, **caractérisée en ce que** les éléments de direction ou guidage des récipients (14, 15) sont formés au moins en partie par des éléments profilés qui, en vue de la diminution de la largeur du couloir, peuvent être fixés sur respectivement une joue (5a), de préférence peuvent être emmanchés sur respectivement une joue (5a).

8. Transport selon l'une quelconque des revendications précédentes, **caractérisé en ce que** les éléments de direction ou guidage des récipients (8, 14, 15) peuvent être déplacés perpendiculairement au sens de transport (A).

9. Voie de transport selon l'une quelconque des revendications précédentes, **caractérisée en ce que** les éléments de direction ou guidage des récipients (8), plus précisément leurs surfaces de direction ou guidage, sont formés par au moins une paroi de direction ou guidage (9).

10. Voie de transport selon l'une quelconque des revendications précédentes, **caractérisée en ce que** lesdits au moins deux éléments de direction ou guidage des récipients (8), prévus de part et d'autre d'une joue (5) commune, peuvent être déplacés symétriquement par rapport à la joue (5).

11. Voie de transport selon l'une quelconque des revendications précédentes, **caractérisée en ce qu'**au niveau d'au moins un couloir (6), une joue non munie d'un élément de direction ou guidage des récipients (8) est située en face de l'élément de direction ou guidage des récipients (8) prévu sur une des joues (5).

12. Voie de transport selon l'une quelconque des revendications précédentes, **caractérisée en ce qu'**au niveau d'au moins un couloir (6a), un autre élément de direction ou guidage des récipients (14, 15) sur une autre joue (5a) est situé en face de l'élément de direction ou guidage des récipients (14, 15) prévu sur une des joues (5a).

13. Voie de transport selon l'une quelconque des revendications précédentes, **caractérisée en ce que** des éléments de direction ou guidage des récipients (8) sont prévus exclusivement au niveau des joues (5) qui séparent respectivement deux couloirs (6) adjacents l'un à l'autre.

14. Voie de transport selon l'une quelconque des revendications précédentes, **caractérisée par** au moins un élément de déplacement (11, 12) destiné à déplacer chaque élément de direction ou guidage des récipients (8) transversalement au sens de transport (A).

15. Voie de transport selon la revendication 14, **caractérisée en ce que** pour deux éléments de direction ou guidage des récipients (8), prévus de part et d'autre d'une joue (5), il est prévu au moins un élément de déplacement (11, 12) pour les deux éléments de direction ou guidage des récipients.

16. Voie de transport selon l'une quelconque des revendications précédentes, **caractérisée en ce que**, pour plusieurs éléments de direction ou guidage des récipients (8) et/ou pour plusieurs éléments de déplacement (11, 12) pour de tels éléments de direction ou guidage des récipients (8), il est prévu un système d'entraînement commun pour tous les éléments de déplacement (11, 12).
